# EUROPEAN PATENT SPECIFICATION

(11) **EP 4 645 713 B1**
(45) Date of publication and mention of the grant of the patent: **27.05.2026**
(21) Application number: 24173699.0
(22) Date of filing: 02.05.2024
(51) Int. Cl.: H04B 7/185, H04W 24/08, H04W 84/06, H04W 88/06

(54) **COMMUNICATION QUALITY CHECKING REGARDING DEVICES USING TERRESTRIAL AND NON-TERRESTRIAL COMMUNICATION NETWORKS**
KOMMUNIKATIONSQUALITÄTSÜBERPRÜFUNG HINSICHTLICH VORRICHTUNGEN UNTER VERWENDUNG TERRESTRISCHER UND NICHTTERRESTRISCHER KOMMUNIKATIONSNETZE
VÉRIFICATION DE QUALITÉ DE COMMUNICATION CONCERNANT DES DISPOSITIFS UTILISANT DES RÉSEAUX DE COMMUNICATION TERRESTRES ET NON TERRESTRES

(43) Date of publication of application: 05.11.2025
(73) Proprietor: Rohde & Schwarz GmbH & Co. KG, 81671 München (DE)
(72) Inventor: Stracke, Martin, 83620 Feldkirchen-Westerham (DE); Klaassen, Ralf, 81673 Munich (DE)
(74) Representative: Novagraaf Group

(56) References cited:
- CN-A- 112 469 094
- CN-A- 115 379 493
- GB-A- 2 588 373

## Description

The invention relates to a system for communication quality checking with respect to a device under test using terrestrial and non-terrestrial communication networks, and a method for communication quality checking with respect to a device under test using terrestrial and non-terrestrial communication networks. GB2588373A discloses a method for routing vehicle-to-everything (V2X) communications in connected vehicles by monitoring quality of service (QoS) in terrestrial and satellite networks, selecting one or both based on QoS, and routing or rerouting communications accordingly to ensure uninterrupted service. CN115379493A describes a test method and system for integrating satellite and 5G networks, using test terminals to acquire signal data from both networks simultaneously, with a service platform analyzing the data to evaluate fusion effects, suggest optimizations, and address mobility issues. CN112469094A presents a network switching method for user equipment in hybrid terrestrial (TN) and non-terrestrial (NTN) networks, involving measurement of cell signal quality metrics, comparison against handover conditions, and switching between networks to maintain efficient connectivity.

Generally, in times of an increasing number of devices providing terrestrial and non-terrestrial communication capabilities, there is a growing need of a system for communication quality checking with respect to a device under test using terrestrial and non-terrestrial communication networks and a corresponding method to verify correct functioning of such devices in a particularly efficient and accurate manner.

Accordingly, there is the object to provide a system for communication quality checking with respect to a device under test using terrestrial and non-terrestrial communication networks and a method for communication quality checking with respect to a device under test using terrestrial and non-terrestrial communication networks in order to allow for verifying correct functioning of such a device under test in a particularly efficient and accurate manner.

This object is solved by the features of the first independent claim for a system for communication quality checking with respect to a device under test using terrestrial and non-terrestrial communication networks, and the features of the second independent claim for a method for communication quality checking with respect to a device under test using terrestrial and non-terrestrial communication networks. The dependent claims contain further developments.

According to a first aspect of the invention, a system for communication quality checking with respect to a device under test using terrestrial and non-terrestrial communication networks is provided. Said system comprises a processing unit, a terrestrial interface being in communication with the processing unit, and a non-terrestrial interface being in communication with the processing unit. The processing unit is configured to acquire terrestrial data with respect to at least one communication between the device under test and at least one terrestrial communication network with the aid of the terrestrial interface. Additionally, the processing unit is configured to acquire non-terrestrial data with respect to at least one communication between the device under test and at least one non-terrestrial communication network with the aid of the non-terrestrial interface. In further addition to this, the processing unit is configured to check communication quality with respect to the device under test based on the terrestrial data and the non-terrestrial data. In further addition to this, the processing unit is configured to force the device under test to exclusively use at least one terrestrial communication network or at least one non-terrestrial communication network.

Advantageously, correct functioning of the device under test can be verified in a particularly efficient and accurate manner.

According to an implementation form of the first aspect of the invention, the terrestrial data and the non-terrestrial data are acquired in parallel and/or simultaneously.

Advantageously, for instance, time can be saved, thereby increasing efficiency.

According to a further implementation form of the first aspect of the invention, the at least one terrestrial communication network comprises or is at least one cellular network. Advantageously, for example, different radio access technologies, such as GSM, UMTS, LTE, 5GNR, can be used in a flexible manner.

According to a further implementation form of the first aspect of the invention, the at least one non-terrestrial communication network comprises or is at least one satellite network. Advantageously, for instance, further radio access technologies, such as 5GNR-NTN, can be used.

According to a further implementation form of the first aspect of the invention, the terrestrial interface is configured to be movable. Advantageously, for example, the terrestrial data can be acquired at different locations in an efficient manner.

According to a further implementation form of the first aspect of the invention, the non-terrestrial interface is configured to be movable. Advantageously, for instance, the non-terrestrial data can be acquired at different locations in an efficient manner.

According to a further implementation form of the first aspect of the invention, the terrestrial data and/or the non-terrestrial data are acquired at different moments in time. Advantageously, for example, efficiency can be increased.

According to a further implementation form of the first aspect of the invention, the processing unit is configured to correlate the terrestrial data and the non-terrestrial data, especially by analyzing at least one permanent and/or reproducible parameter with respect to the device under test and/or the at least one communication between the device under test and at least one terrestrial communication network and/or the at least one communication between the device under test and at least one non-terrestrial communication network. Advantageously, for instance, terrestrial domains and non-terrestrial domains can be monitored in a seamless manner.

According to a further implementation form of the first aspect of the invention, the at least one permanent and/or reproducible parameter comprises or is at least one of modulation, codec, forward error correction, International Mobile Subscriber Identity (IMSI), International Mobile Equipment Identity (IMEI), Media Access Control (MAC), terminal identity (terminal ID), Globally Unique Temporary Identifier (GUTI), Subscription Concealed Identifier (SUCI), Subscription Permanent Identifier (SUPI), or any combination thereof. Advantageously, for example, complexity can be reduced, thereby increasing efficiency.

According to a further implementation form of the first aspect of the invention, the terrestrial data and/or the non-terrestrial data comprises at least one of position information, especially position information with respect to the device under test, signal strength, especially signal strength with respect to the device under test, payload, or any combination thereof. Advantageously, for instance, especially in the context of communication quality checking, both accuracy and efficiency can be increased.

According to a further implementation form of the first aspect of the invention, the processing unit is configured to identify and/or localize the device under test, especially based on the terrestrial data and/or the non-terrestrial data. Advantageously, for example, especially in the context of checking communication quality, not only accuracy but also efficiency can be increased.

According to a further implementation form of the first aspect of the invention, especially in the event that at least one communication between the device under test and the at least one terrestrial communication network exists, the processing unit is configured to trigger the device under test to establish at least one communication between the device under test and the at least one non-terrestrial communication network and/or to terminate at least one or each communication between the device under test and the at least one terrestrial communication network. Advantageously, for instance, especially for maintenance and/or communication quality checking purposes, the device under test can efficiently be forced to exclusively communicate in a non-terrestrial domain.

According to a further implementation form of the first aspect of the invention, especially in the event that at least one communication between the device under test and the at least one non-terrestrial communication network exists, the processing unit is configured to trigger the device under test to establish at least one communication between the device under test and the at least one terrestrial communication network and/or to terminate at least one or each communication between the device under test and the at least one non-terrestrial communication network. Advantageously, for example, especially for maintenance and/or communication quality checking purposes, the device under test can efficiently be forced to exclusively communicate in a terrestrial domain. According to a further implementation form of the first aspect of the invention, the system further comprises the device under test, wherein the device under test comprises or is at least one of a mobile device, a cellphone, a smartphone, a tablet, a laptop, an Internet of Things device, a user equipment, a terminal, especially a satellite terminal, or any combination thereof. Advantageously, for instance, different devices can be used in a flexible manner.

According to a second aspect of the invention, a method for communication quality checking with respect to a device under test using terrestrial and non-terrestrial communication networks is provided. Said method, especially using the system according to the first aspect of the invention or any of its implementation forms, respectively, comprises the steps of acquiring terrestrial data with respect to at least one communication between the device under test and at least one terrestrial communication network, acquiring non-terrestrial data with respect to at least one communication between the device under test and at least one non-terrestrial communication network, and checking communication quality with respect to the device under test based on the terrestrial data and the non-terrestrial data, and forcing the device under test to exclusively use at least one terrestrial communication network or at least one non-terrestrial communication network. Advantageously, correct functioning of the device under test can be verified in a particularly efficient and accurate manner.

It is noted that the implementation forms of the first aspect of the invention can analogously apply for the second aspect of the invention.

Exemplary embodiments of the invention are now further explained with respect to the drawings by way of example only, and not for limitation. In the drawings:
- Fig. 1: shows an exemplary embodiment of an inventive system; and
- Fig. 2: shows a flow chart of an exemplary embodiment of the second aspect of the invention.

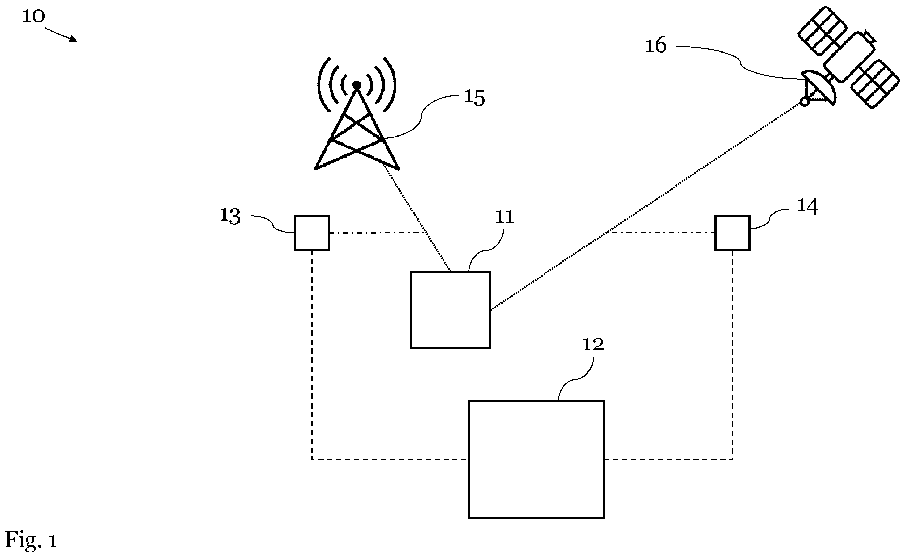

With respect to Fig. 1, an exemplary embodiment of a system 10 for communication quality checking with respect to a device under test 11 using terrestrial and non-terrestrial communication networks is illustrated.

In accordance with said Fig. 1, the system 10 comprises a processing unit 12, a terrestrial interface 13 being in communication with the processing unit 12, and a non-terrestrial interface 14 being in communication with the processing unit 12.

With respect to the above-mentioned term "being in communication", it is noted that the terrestrial interface 13 and/or the non-terrestrial interface 14 can be connected to the processing unit 12 in a wired and/or wireless and/or virtual manner. Additionally or alternatively, the terrestrial interface 13 and/or the non-terrestrial interface 14 can be connected to the processing unit 12 in a direct or indirect manner.

It is further noted that it might be particularly advantageous if the processing unit 12 and/or the terrestrial interface 13 and/or the non-terrestrial interface 14 are locally distributed.

With respect to the processing unit 12, it is noted that said processing unit 12 can comprise or be a processing device and/or a computer.

With respect to the system 10, it is noted that the system 10 can be implemented as a device for communication quality checking with respect to a device under test using terrestrial and non-terrestrial communication networks. Such a device may comprise the processing unit 12 and the terrestrial interface 13 or the processing unit 12 and the non-terrestrial interface 14 or the processing 12, the terrestrial interface 13 and the non-terrestrial interface 14.

According to Fig. 1, the processing unit 12 is configured to acquire terrestrial data with respect to at least one communication between the device under test 11 and at least one terrestrial communication network with the aid of the terrestrial interface 13. As it can exemplarily be seen, there is one terrestrial communication link between the device under test 11 and a base station 15, especially a cellular base station, representing a terrestrial communication network. The terrestrial interface 13 may be configured to listen to said terrestrial communication link. Additionally or alternatively, the terrestrial interface 13 may be configured such that said terrestrial communication link flows via the terrestrial interface 13.

Furthermore, the processing unit 12 is configured to acquire non-terrestrial data with respect to at least one communication between the device under test 11 and at least one non-terrestrial communication network with the aid of the non-terrestrial interface 14. As it can exemplarily be seen, there is one non-terrestrial communication link between the device under test 11 and a satellite 16 representing a non-terrestrial communication network. The non-terrestrial interface 14 may be configured to listen to said non-terrestrial communication link. Additionally or alternatively, the non-terrestrial interface 14 may be configured such that said non-terrestrial communication link flows via the non-terrestrial interface 14.

Moreover, the processing unit 12 is configured to check communication quality with respect to the device under test 11 based on the terrestrial data and the non-terrestrial data.

It is noted that it might be particularly advantageous if the terrestrial data and the non-terrestrial data are acquired in parallel and/or simultaneously. Additionally or alternatively, the terrestrial data and/or the non-terrestrial data can be acquired in a multiplexed manner.

As indicated above, the terrestrial communication network exemplarily comprises or is a cellular network, especially a cellular communication network, and the non-terrestrial communication network exemplarily comprises or is a satellite network, especially a satellite communication network.

It is further noted that it might be particularly advantageous if the terrestrial interface 13 is configured to be movable, and/or the non-terrestrial interface 14 is configured to be movable. Accordingly, it might be particularly advantageous if the terrestrial data and/or the non-terrestrial data are acquired at different locations. In addition to this or as an alternative, the terrestrial data and/or the non-terrestrial data can be acquired at different moments in time.

For instance, the terrestrial interface 13 and/or the non-terrestrial interface 14 may be arranged on a vehicle, especially a car and/or a ship and/or an airplane and/or a flying platform and/or an unmanned aerial system and/or an unmanned aerial vehicle. Accordingly, the processing unit 12 can exemplarily acquire the terrestrial data and/or the non-terrestrial data at different locations at different moments in time.

It might be particularly advantageous if the processing unit 12 is configured to correlate the terrestrial data and the non-terrestrial data, especially by analyzing at least one permanent and/or reproducible parameter with respect to the device under test 11 and/or the terrestrial communication link and/or the non-terrestrial communication link. Said at least one permanent and/or reproducible parameter may especially comprise or be at least one non-changing parameter.

With respect to the at least one permanent and/or reproducible parameter, it is noted that it might be particularly advantageous if the at least one permanent and/or reproducible parameter comprises or is at least one of modulation, codec, forward error correction, International Mobile Subscriber Identity (IMSI), International Mobile Equipment Identity (IMEI), Media Access Control (MAC), terminal identity (terminal ID), Globally Unique Temporary Identifier (GUTI), Subscription Concealed Identifier (SUCI), Subscription Permanent Identifier (SUPI), or any combination thereof.

It is further noted that it might be particularly advantageous if, especially with the aid of the terrestrial interface 13 and/or the non-terrestrial interface 14, the processing unit 12 is configured to detect and/or identify any signaling and/or communication, preferably radio frequency signaling and/or communication, in an area of interest using terrestrial and/or non-terrestrial communication networks and/or terrestrial and/or non-terrestrial communication standards. Preferably, the terrestrial interface 13 and/or the non-terrestrial interface may comprise at least one antenna.

It might be particularly advantageous if, especially in the context of identification, the processing unit 12 is configured to assign the above-mentioned at least one permanent and/or reproducible parameter to a person, especially a human or a group of people, and/or to a platform, especially a vehicle or a building.

Again, with respect to the terrestrial data and/or the non-terrestrial data, it is noted that it might be particularly advantageous if the terrestrial data and/or the non-terrestrial data comprises at least one of position information, especially position information with respect to the device under test 11, signal strength, especially signal strength with respect to the device under test 11, payload, or any combination thereof.

It is further noted that it might be particularly advantageous if the processing unit 12 is configured to identify and/or localize the device under test 11, especially based on the terrestrial data and/or the non-terrestrial data.

Furthermore, especially in the event that at least one communication between the device under test (11) and the at least one terrestrial communication network exists, exemplarily in the event that the terrestrial communication links exists, the processing unit 12 may be configured to trigger the device under test 11 to establish at least one communication between the device under test 11 and the at least one non-terrestrial communication network, exemplarily to establish the non-terrestrial communication link, and/or to terminate at least one or each communication between the device under test 11 and the at least one terrestrial communication network, exemplarily to terminate the terrestrial communication link.

Moreover, especially in the event that at least one communication between the device under test 11 and the at least one non-terrestrial communication network exists, exemplarily in the event that the non-terrestrial communication link exists, the processing unit 12 may be configured to trigger the device under test 11 to establish at least one communication between the device under test 11 and the at least one terrestrial communication network, exemplarily to establish the terrestrial communication link, and/or to terminate at least one or each communication between the device under test 11 and the at least one non-terrestrial communication network, exemplarily to terminate the non-terrestrial communication link.

It is noted that it might be particularly advantageous if, especially with the aid of the terrestrial interface 13 and/or the non-terrestrial interface 14, the processing unit 12 is configured to force the device under test 11 to exclusively use at least one terrestrial communication network, preferably a single terrestrial communication network, or at least one non-terrestrial communication network, preferably a single non-terrestrial communication network.

It is further noted that the system 10 can comprise the device under test (11), wherein the device under test 11 may preferably comprise or be at least one of a mobile device, a cellphone, a smartphone, a tablet, a laptop, an Internet of Things device, a user equipment, a terminal, especially a satellite terminal, or any combination thereof.

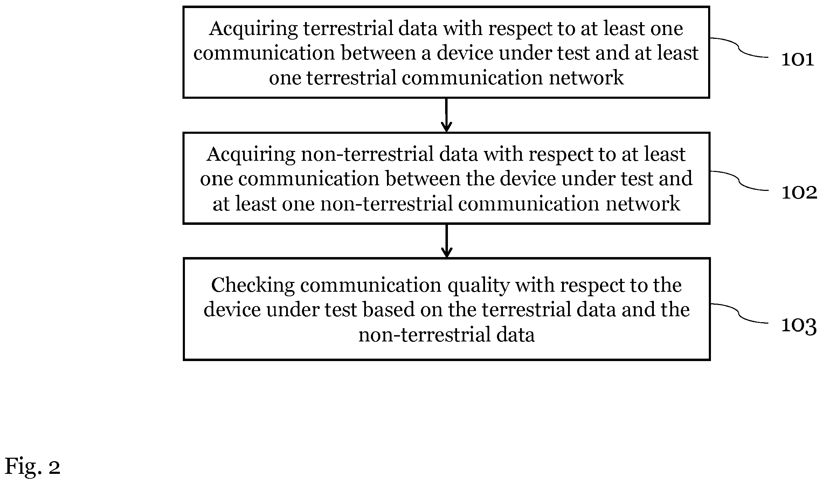

Finally, Fig. 2 shows a flow chart of an embodiment of the inventive method for communication quality checking with respect to a device under test using terrestrial and non-terrestrial communication networks. A first step 101 comprises acquiring terrestrial data with respect to at least one communication between the device under test and at least one terrestrial communication network.

Furthermore, a second step 102 comprises acquiring non-terrestrial data with respect to at least one communication between the device under test and at least one non-terrestrial communication network. Moreover, a third step 103 comprises checking communication quality with respect to the device under test based on the terrestrial data and the non-terrestrial data.

It is noted that it might be particularly advantageous if the method uses the system 10 according to Fig. **1****.** Accordingly, the device under test may be the device under test 11. The first step 101 may be performed by the processing unit 12 with the aid of the terrestrial interface 13. The second step 102 may be performed by the processing unit 12 with the aid of the non-terrestrial interface 14. The third step 103 may be performed by the processing unit 12.

Especially with respect to the first step 101 and the second step 102, it is noted that it might be particularly advantageous if the terrestrial data and the non-terrestrial data are acquired in parallel and/or simultaneously.

With respect to the at least one terrestrial communication network, it is noted that it might be particularly advantageous if the at least one terrestrial communication network comprises or is at least one cellular network.

Furthermore, with respect to the at least one non-terrestrial communication network, it is noted that it might be particularly advantageous if the at least one non-terrestrial communication network comprises or is at least one satellite network.

As already mentioned in the context of Fig. 1, the terrestrial interface 12 may be configured to be movable. Accordingly, it might be particularly advantageous if the method comprises the step of acquiring terrestrial data with respect to at least one communication between the device under test and at least one terrestrial communication network at different locations. It is noted that the first step 101 may especially be replaced by said step or specified in such a manner, respectively.

As explained in the context of Fig. 1, the non-terrestrial interface 14 may be configured is configured to be movable. Accordingly, it might be particularly advantageous if the method comprises the step of acquiring non-terrestrial data with respect to at least one communication between the device under test and at least one non-terrestrial communication network at different locations. It is noted that the second step 102 may especially be replaced by said step or specified in such a manner, respectively.

Again, with respect to the first step 101 or the second step 102, respectively, it is noted that it might be particularly advantageous if the terrestrial data and/or the non-terrestrial data are acquired at different moments in time.

It is further noted that it might be particularly advantageous if the method comprises the step of correlating the terrestrial data and the non-terrestrial data, especially by analyzing at least one permanent and/or reproducible parameter with respect to the device under test and/or the at least one communication between the device under test and at least one terrestrial communication network and/or the at least one communication between the device under test and at least one non-terrestrial communication network. Said step may especially be performed by the processing unit 12.

With respect to the at least one permanent and/or reproducible parameter, it is noted that it might be particularly advantageous if the at least one permanent and/or reproducible parameter comprises or is at least one of modulation, codec, forward error correction, International Mobile Subscriber Identity (IMSI), International Mobile Equipment Identity (IMEI), Media Access Control (MAC), terminal identity (terminal ID), Globally Unique Temporary Identifier (GUTI), Subscription Concealed Identifier (SUCI), Subscription Permanent Identifier (SUPI), or any combination thereof.

It is further noted that it might be particularly advantageous if the method comprises the step of detecting and/or identifying any signaling and/or communication, preferably radio frequency signaling and/or communication, in an area of interest using terrestrial and/or non-terrestrial communication networks and/or terrestrial and/or non-terrestrial communication standards. Said step may especially be performed by the processing unit 12, preferably with the aid of the terrestrial interface 13 and/or the non-terrestrial interface 14.

It might be particularly advantageous if, especially in the context of identification, the method comprises the step of assigning the above-mentioned at least one permanent and/or reproducible parameter to a person, especially a human or a group of people, and/or to a platform, especially a vehicle or a building. Said step may especially be performed by the processing unit 12.

Moreover, it might be particularly advantageous if the terrestrial data and/or the non-terrestrial data comprise(s) at least one of position information, especially position information with respect to the device under test, signal strength, especially signal strength with respect to the device under test, payload, or any combination thereof.

It is further noted that it might be particularly advantageous if the method comprises the step of identifying and/or localizing the device under test, especially based on the terrestrial data and/or the non-terrestrial data. Said step may especially be performed by the processing unit 12.

Furthermore, especially in the event that at least one communication between the device under test and the at least one terrestrial communication network exists, the method may comprise the step of triggering the device under test to establish at least one communication between the device under test and the at least one non-terrestrial communication network and/or to terminate at least one or each communication between the device under test and the at least one terrestrial communication network. Said step may especially be performed by the processing unit 12.

Additionally or alternatively, especially in the event that at least one communication between the device under test and the at least one non-terrestrial communication network exists, the method may comprise the step of triggering the device under test to establish at least one communication between the device under test and the at least one terrestrial communication network and/or to terminate at least one or each communication between the device under test and the at least one non-terrestrial communication network. Said step may especially be performed by the processing unit 12.

It is noted that it might be particularly advantageous if the method comprises the step of forcing the device under test to exclusively use at least one terrestrial communication network, preferably a single terrestrial communication network, or at least one non-terrestrial communication network, preferably a single non-terrestrial communication network. Said step may especially be performed by the processing unit 12, preferably with the aid of the terrestrial interface 13 and/or the non-terrestrial interface 14.

Although the invention has been explained in relation to its preferred embodiment(s) as mentioned above, it is to be understood that many other possible modifications and variations can be made without departing from the scope of the present invention, which is defined by the claims.

## Claims

1. A system (10) for communication quality checking with respect to a device under test (11) using terrestrial and non-terrestrial communication networks, the system (10) comprising:
a processing unit (12),
a terrestrial interface (13) being in communication with the processing unit (12), and
a non-terrestrial interface (14) being in communication with the processing unit (12),
wherein the processing unit (12) is configured to acquire terrestrial data with respect to at least one communication between the device under test (11) and at least one terrestrial communication network with the aid of the terrestrial interface (13),
wherein the processing unit (12) is configured to acquire non-terrestrial data with respect to at least one communication between the device under test (11) and at least one non-terrestrial communication network with the aid of the non-terrestrial interface (14),
wherein the processing unit (12) is configured to check communication quality with respect to the device under test (11) based on the terrestrial data and the non-terrestrial data,
the system (10) **characterized in that** the processing unit (12) is configured to force the device under test (11) to exclusively use at least one terrestrial communication network or at least one non-terrestrial communication network.

2. The system (10) according to claim 1,
wherein the terrestrial data and the non-terrestrial data are acquired in parallel and/or simultaneously.

3. The system (10) according to claim 1 or 2,
wherein the at least one terrestrial communication network comprises or is at least one cellular network.

4. The system (10) according to any of the claims 1 to 3, wherein the at least one non-terrestrial communication network comprises or is at least one satellite network.

5. The system (10) according to any of the claims 1 to 4, wherein the terrestrial interface (13) is configured to be movable.

6. The system (10) according to any of the claims 1 to 5, wherein the non-terrestrial interface (14) is configured to be movable.

7. The system (10) according to any of the claims 1 to 6, wherein the terrestrial data and/or the non-terrestrial data are acquired at different moments in time.

8. The system (10) according to any of the claims 1 to 7, wherein the processing unit (12) is configured to correlate the terrestrial data and the non-terrestrial data, especially by analyzing at least one permanent and/or reproducible parameter with respect to the device under test (11) and/or the at least one communication between the device under test (11) and at least one terrestrial communication network and/or the at least one communication between the device under test (11) and at least one non-terrestrial communication network.

9. The system (10) according to claim 8,
wherein the at least one permanent and/or reproducible parameter comprises or is at least one of modulation, codec, forward error correction, International Mobile Subscriber Identity, International Mobile Equipment Identity, Media Access Control, terminal identity, Globally Unique Temporary Identifier, Subscription Concealed Identifier, Subscription Permanent Identifier, or any combination thereof.

10. The system (10) according to any of the claims 1 to 9, wherein the terrestrial data and/or the non-terrestrial data comprises at least one of position information, especially position information with respect to the device under test (11), signal strength, especially signal strength with respect to the device under test (11), payload, or any combination thereof.

11. The system (10) according to any of the claims 1 to 10, wherein the processing unit (12) is configured to identify and/or localize the device under test (11), especially based on the terrestrial data and/or the non-terrestrial data.

12. The system (10) according to any of the claims 1 to 11, wherein, especially in the event that at least one communication between the device under test (11) and the at least one terrestrial communication network exists, the processing unit (12) is configured to trigger the device under test (11) to establish at least one communication between the device under test (11) and the at least one non-terrestrial communication network and/or to terminate at least one or each communication between the device under test (11) and the at least one terrestrial communication network.

13. The system (10) according to any of the claims 1 to 12, wherein, especially in the event that at least one communication between the device under test (11) and the at least one non-terrestrial communication network exists, the processing unit (12) is configured to trigger the device under test (11) to establish at least one communication between the device under test (11) and the at least one terrestrial communication network and/or to terminate at least one or each communication between the device under test (11) and the at least one non-terrestrial communication network.

14. The system (10) according to any of the claims 1 to 13, further comprising:
the device under test (11),
wherein the device under test (11) comprises or is at least one of a mobile device, a cellphone, a smartphone, a tablet, a laptop, an Internet of Things device, a user equipment, a terminal, especially a satellite terminal, or any combination thereof.

15. A method for communication quality checking with respect to a device under test (11) using terrestrial and non-terrestrial communication networks, the method, using the system according to any of the claims 1 to 14, comprising the steps of:
acquiring (101) terrestrial data with respect to at least one communication between the device under test (11) and at least one terrestrial communication network,
acquiring (102) non-terrestrial data with respect to at least one communication between the device under test (11) and at least one non-terrestrial communication network,
checking (103) communication quality with respect to the device under test (11) based on the terrestrial data and the non-terrestrial data, and the method **characterized in that** it further comprises the step of:
forcing the device under test (11) to exclusively use at least one terrestrial communication network or at least one non-terrestrial communication network.

## Patentansprüche

1. System (10) zum Kommunikationsqualitätskontrollieren in Bezug auf einen Prüfling (11) unter Verwendung terrestrischer und nicht terrestrischer Kommunikationsnetze, das System (10) umfassend:
eine Verarbeitungseinheit (12),
eine terrestrische Schnittstelle (13), die in Kommunikation mit der Verarbeitungseinheit (12) steht, und
eine nicht terrestrische Schnittstelle (14), die in Kommunikation mit der Verarbeitungseinheit (12) steht,
wobei die Verarbeitungseinheit (12) konfiguriert ist, um terrestrische Daten in Bezug auf mindestens eine Kommunikation zwischen dem Prüfling (11) und mindestens einem terrestrischen Kommunikationsnetz mit der Hilfe der terrestrischen Schnittstelle (13) zu erfassen,
wobei die Verarbeitungseinheit (12) konfiguriert ist, um nicht terrestrische Daten in Bezug auf mindestens eine Kommunikation zwischen dem Prüfling (11) und mindestens einem nicht terrestrischen Kommunikationsnetz mit der Hilfe der nicht terrestrischen Schnittstelle (14) zu erfassen,
wobei die Verarbeitungseinheit (12) konfiguriert ist, um die Kommunikationsqualität in Bezug auf den Prüfling (11) basierend auf den terrestrischen Daten und den nicht terrestrischen Daten zu kontrollieren,
wobei das System (10) **dadurch gekennzeichnet ist, dass** die Verarbeitungseinheit (12) konfiguriert ist, um den Prüfling (11) zu zwingen, ausschließlich mindestens ein terrestrisches Kommunikationsnetz oder mindestens ein nicht terrestrisches Kommunikationsnetz zu verwenden.

2. System (10) nach Anspruch 1,
wobei die terrestrischen Daten und die nicht terrestrischen Daten parallel und/oder gleichzeitig erfasst werden.

3. System (10) nach Anspruch 1 oder 2,
wobei das mindestens eine terrestrische Kommunikationsnetz mindestens ein Zellularnetz umfasst oder ist.

4. System (10) nach einem der Ansprüche 1 bis 3,
wobei das mindestens eine nicht terrestrische Kommunikationsnetz mindestens ein Satellitennetz umfasst oder ist.

5. System (10) nach einem der Ansprüche 1 bis 4,
wobei die terrestrische Schnittstelle (13) konfiguriert ist, um bewegbar zu sein.

6. System (10) nach einem der Ansprüche 1 bis 5,
wobei die nicht terrestrische Schnittstelle (14) konfiguriert ist, um bewegbar zu sein.

7. System (10) nach einem der Ansprüche 1 bis 6,
wobei die terrestrischen Daten und/oder die nicht terrestrischen Daten zu verschiedenen Zeitpunkten erfasst werden.

8. System (10) nach einem der Ansprüche 1 bis 7,
wobei die Verarbeitungseinheit (12) konfiguriert ist, um die terrestrischen Daten und die nicht terrestrischen Daten zu korrelieren, insbesondere durch ein Analysieren mindestens eines permanenten und/oder reproduzierbaren Parameters in Bezug auf den Prüfling (11) und/oder die mindestens eine Kommunikation zwischen dem Prüfling (11) und mindestens einem terrestrischen Kommunikationsnetz und/oder die mindestens eine Kommunikation zwischen dem Prüfling (11) und mindestens einem nicht terrestrischen Kommunikationsnetz.

9. System (10) nach Anspruch 8,
wobei der mindestens eine permanente und/oder reproduzierbare Parameter mindestens eines von Modulation, Codec, Vorwärtsfehlerkorrektur, internationale Mobilteilnehmerkennung, internationale Mobilgerätekennung, Mediumzugangssteuerung, Terminalkennung, globaler eindeutiger temporärer Kennzeichner, versteckter Teilnahmeberechtigungskennzeichner, permanenter Teilnahmeberechtigungskennzeichner oder einer beliebigen Kombination davon umfasst oder ist.

10. System (10) nach einem der Ansprüche 1 bis 9,
wobei die terrestrischen Daten und/oder die nicht terrestrischen Daten mindestens eines von Positionsinformationen, insbesondere Positionsinformationen in Bezug auf den Prüfling (11), Signalstärke, insbesondere Signalstärke in Bezug auf den Prüfling (11), Nutzlast oder einer beliebigen Kombination davon umfassen.

11. System (10) nach einem der Ansprüche 1 bis 10,
wobei die Verarbeitungseinheit (12) konfiguriert ist, um den Prüfling (11) zu identifizieren und/oder zu lokalisieren, insbesondere basierend auf den terrestrischen Daten und/oder den nicht terrestrischen Daten.

12. System (10) nach einem der Ansprüche 1 bis 11,
wobei, insbesondere in dem Fall, dass mindestens eine Kommunikation zwischen dem Prüfling (11) und dem mindestens einen terrestrischen Kommunikationsnetz besteht, die Verarbeitungseinheit (12) konfiguriert ist, um den Prüfling (11) zu veranlassen, mindestens eine Kommunikation zwischen dem Prüfling (11) und dem mindestens einen nicht terrestrischen Kommunikationsnetz aufzubauen und/oder mindestens eine oder jede Kommunikation zwischen dem Prüfling (11) und dem mindestens einen terrestrischen Kommunikationsnetz zu beenden.

13. System (10) nach einem der Ansprüche 1 bis 12,
wobei, insbesondere in dem Fall, dass mindestens eine Kommunikation zwischen dem Prüfling (11) und dem mindestens einen nicht terrestrischen Kommunikationsnetz besteht, die Verarbeitungseinheit (12) konfiguriert ist, um den Prüfling (11) zu veranlassen, mindestens eine Kommunikation zwischen dem Prüfling (11) und dem mindestens einen terrestrischen Kommunikationsnetz aufzubauen und/oder mindestens eine oder jede Kommunikation zwischen dem Prüfling (11) und dem mindestens einen nicht terrestrischen Kommunikationsnetz zu beenden.

14. System (10) nach einem der Ansprüche 1 bis 13, ferner umfassend:
den Prüfling (11),
wobei der Prüfling (11) mindestens eines von einer mobilen Vorrichtung, einem Mobiltelefon, einem Smartphone, einem Tablet, einem Laptop, einer Internet-der-Dinge-Vorrichtung, einer Benutzereinrichtung, einem Terminal, insbesondere einem Satellitenterminal, oder einer beliebigen Kombination davon umfasst oder ist.

15. Verfahren zum Kommunikationsqualitätskontrollieren in Bezug auf einen Prüfling (11) unter Verwendung terrestrischer und nicht terrestrischer Kommunikationsnetze, das Verfahren,
unter Verwendung des Systems nach einem der Ansprüche 1 bis 14, umfassend die Schritte:
Erfassen (101) terrestrischer Daten in Bezug auf mindestens eine Kommunikation zwischen dem Prüfling (11) und mindestens einem terrestrischen Kommunikationsnetz,
Erfassen (102) nicht terrestrischer Daten in Bezug auf mindestens eine Kommunikation zwischen dem Prüfling (11) und mindestens einem nicht terrestrischen Kommunikationsnetz,
Kontrollieren (103) der Kommunikationsqualität in Bezug auf den Prüfling (11) basierend auf den terrestrischen Daten und den nicht terrestrischen Daten und wobei das Verfahren **dadurch gekennzeichnet ist, dass** es ferner den Schritt umfasst:
Zwingen des Prüflings (11), ausschließlich mindestens ein terrestrisches Kommunikationsnetz oder mindestens ein nicht terrestrisches Kommunikationsnetz zu verwenden.

## Revendications

1. Système (10) de vérification de qualité de communication par rapport à un dispositif à l'essai (11) à l'aide de réseaux de communication terrestre et non terrestre, le système (10) comprenant :
une unité de traitement (12),
une interface terrestre (13) en communication avec l'unité de traitement (12), et
une interface non terrestre (14) en communication avec l'unité de traitement (12),
dans lequel l'unité de traitement (12) est configurée pour acquérir des données terrestres par rapport à au moins une communication entre le dispositif à l'essai (11) et au moins un réseau de communication terrestre avec l'aide de l'interface terrestre (13),
dans lequel l'unité de traitement (12) est configurée pour acquérir des données non terrestres par rapport à au moins une communication entre le dispositif à l'essai (11) et au moins un réseau de communication non terrestre avec l'aide de l'interface non terrestre (14),
dans lequel l'unité de traitement (12) est configurée pour vérifier une qualité de communication par rapport au dispositif à l'essai (11) en fonction des données terrestres et des données non terrestres,
le système (10) **étant caractérisé en ce que** l'unité de traitement (12) est configurée pour forcer le dispositif à l'essai (11) à utiliser exclusivement au moins un réseau de communication terrestre ou au moins un réseau de communication non terrestre.

2. Système (10) selon la revendication 1,
dans lequel les données terrestres et les données non terrestres sont acquises en parallèle et/ou simultanément.

3. Système (10) selon la revendication 1 ou 2,
dans lequel l'au moins un réseau de communication terrestre comprend ou est au moins un réseau cellulaire.

4. Système (10) selon l'une quelconque des revendications 1 à 3,
dans lequel l'au moins un réseau de communication non terrestre comprend ou est au moins un réseau satellite.

5. Système (10) selon l'une quelconque des revendications 1 à 4,
dans lequel l'interface terrestre (13) est configurée pour être mobile.

6. Système (10) selon l'une quelconque des revendications 1 à 5,
dans lequel l'interface non terrestre (14) est configurée pour être mobile.

7. Système (10) selon l'une quelconque des revendications 1 à 6,
dans lequel les données terrestres et/ou les données non terrestres sont acquises à des moments différents dans le temps.

8. Système (10) selon l'une quelconque des revendications 1 à 7,
dans lequel l'unité de traitement (12) est configurée pour corréler les données terrestres et les données non terrestres, notamment en analysant au moins un paramètre permanent et/ou reproductible par rapport au dispositif à l'essai (11) et/ou l'au moins une communication entre le dispositif à l'essai (11) et au moins un réseau de communication terrestre et/ou l'au moins une communication entre le dispositif à l'essai (11) et au moins un réseau de communication non terrestre.

9. Système (10) selon la revendication 8,
dans lequel l'au moins un paramètre permanent et/ou reproductible comprend ou est au moins l'un parmi modulation, codec, correction d'erreurs sans circuit de retour, identité internationale d'abonné mobile, identité internationale d'équipement mobile, commande d'accès au support, identité de terminal, identifiant temporaire global unique, identifiant caché d'abonnement, identifiant permanent d'abonnement ou leur combinaison quelconque.

10. Système (10) selon l'une quelconque des revendications 1 à 9,
dans lequel les données terrestres et/ou les données non terrestres comprennent au moins l'une parmi des informations de position, notamment des informations de position par rapport au dispositif à l'essai (11), une intensité de signal, notamment une intensité de signal par rapport au dispositif à l'essai (11), une charge utile ou leur combinaison quelconque.

11. Système (10) selon l'une quelconque des revendications 1 à 10,
dans lequel l'unité de traitement (12) est configurée pour identifier et/ou localiser le dispositif à l'essai (11), notamment en fonction des données terrestres et/ou des données non terrestres.

12. Système (10) selon l'une quelconque des revendications 1 à 11,
dans lequel, notamment dans le cas où **il** existe au moins une communication entre le dispositif à l'essai (11) et l'au moins un réseau de communication terrestre, l'unité de traitement (12) est configurée pour déclencher le dispositif à l'essai (11) afin d'établir au moins une communication entre le dispositif à l'essai (11) et l'au moins un réseau de communication non terrestre et/ou pour mettre fin à au moins une ou à chaque communication entre le dispositif à l'essai (11) et l'au moins un réseau de communication terrestre.

13. Système (10) selon l'une quelconque des revendications 1 à 12,
dans lequel, notamment dans le cas où il existe au moins une communication entre le dispositif à l'essai (11) et l'au moins un réseau de communication non terrestre, l'unité de traitement (12) est configurée pour déclencher le dispositif à l'essai (11) afin d'établir au moins une communication entre le dispositif à l'essai (11) et l'au moins un réseau de communication terrestre et/ou pour mettre fin à au moins une ou à chaque communication entre le dispositif à l'essai (11) et l'au moins un réseau de communication non terrestre.

14. Système (10) selon l'une quelconque des revendications 1 à 13 comprenant en outre :
le dispositif à l'essai (11),
dans lequel le dispositif à l'essai (11) comprend ou est au moins l'un parmi un dispositif mobile, un téléphone portable, un mobile multifonction, une tablette, un ordinateur portable, un dispositif de l'Internet des objets, un équipement utilisateur, un terminal, notamment un terminal satellite, ou leur combinaison quelconque.

15. Procédé de vérification de qualité de communication par rapport à un dispositif à l'essai (11) à l'aide de réseaux de communication terrestre et non terrestre, le procédé,
à l'aide du système selon l'une quelconque des revendications 1 à 14, comprenant les étapes consistant à :
acquérir (101) des données terrestres par rapport à au moins une communication entre le dispositif à l'essai (11) et au moins un réseau de communication terrestre,
acquérir (102) des données non terrestres par rapport à au moins une communication entre le dispositif à l'essai (11) et au moins un réseau de communication non terrestre,
vérifier (103) une qualité de communication par rapport au dispositif à l'essai (11) en fonction des données terrestres et des données non terrestres, et le procédé **étant caractérisé en ce qu'il comprend en** outre l'étape consistant à :
forcer le dispositif à l'essai (11) à utiliser exclusivement au moins un réseau de communication terrestre ou au moins un réseau de communication non terrestre.
